# EUROPEAN PATENT APPLICATION

(11) **EP 4 807 606 A1**
(43) Date of publication of application: **16.09.2026**
(21) Application number: 26152024.1
(22) Date of filing: 15.01.2026
(51) Int. Cl.: G06F 21/62, G06Q 10/10

(54) **INFORMATION PROCESSING SYSTEM, INFORMATION PROCESSING APPARATUS, AND INFORMATION PROCESSING METHOD FOR AUTOMATED ELECTRONIC DOCUMENT PROCESSING**

(30) Priority: 11.03.2025 JP 2025038676
(71) Applicant: Toshiba TEC Kabushiki Kaisha, Tokyo 141-8562 (JP)
(72) Inventor: Umekawa, Kohei, Shinagawa-ku, Tokyo 141-8562 (JP)
(74) Representative: Hoffmann Eitle

(57) **Abstract**

An information processing system according to an embodiment includes an administrator terminal, a user terminal, and an information processing apparatus. The administrator terminal is used by an administrator to create a workflow template including a mask processing step to mask or redact preset personal information in an electronic document. The user terminal is used to initiate the workflow processing on the user's electronic document. The information processing apparatus can communicate with the administrator terminal and the user terminal via a network, and execute the masking workflow. The information processing apparatus can receive a designation of any word to be a mask target word, and then add the mask target word to the masking workflow to be masked/redacted from the document in addition to the predefined personal information set for the workflow.

## Description

### CROSS-REFERENCE TO RELATED APPLICATION

This application is based upon and claims the benefit of priority from Japanese Patent Application No. 2025-038676, filed March 11, 2025, the entire contents of which are incorporated herein by reference.

### FIELD

Embodiments described herein relate to an information processing system, an information processing apparatus, and an information processing method for automated document processing such as personal or sensitive information masking or redaction.

### BACKGROUND

A technique has been proposed by which information in a pre-designated field for containing personal information in an electronic application form is hidden to prevent theft of the personal information while displayed on an electronic application terminal device screen.

In recent years, a service has been developed that permits an automated workflow process to be defined. The workflow process may involve a series of tasks or processing steps that may be standardized for repeated use in a certain context or for related purposes. The work flow process may be executed based on a predefined workflow established by the service. The workflow may involve scanning a paper document at an image forming apparatus to obtain an electronic document and then uploading the electronic document to a cloud service designated by a user holding an account with the cloud service. Thus, when a logged-in user scans a paper document at the image forming apparatus, the user may designate a preset workflow to start the workflow tasks. The tasks or steps defined in the preset workflow can be automatically performed after the scanning of the paper document or with the scanning initiating the automated workflow. In such a preset workflow for uploading the electronic document to a cloud service, it is also possible to process the electronic document to automatically mask a word or words corresponding to personal information according to a document template predefined on a system side for the purpose of personal information protection.

However, with such a system-initiated masking method, omission of the mask processing for some information that should be masked or masking of an unnecessary portion often occurs.

### SUMMARY OF THE INVENTION

One of the objects of the present invention is to improve prior art techniques and overcome at least some of the prior art problems as for instance above illustrated.

According to a first aspect of the present invention, it is provided an information processing system, comprising an administrator terminal configured to permit an administrator to create a workflow template including a masking processing step to mask predefined personal information; a user terminal configured to permit a user to request execution of a workflow corresponding to the workflow template created by the administrator; and an information processing apparatus configured to communicate with the administrator terminal and the user terminal via a network and execute the workflow corresponding to the workflow template on a document file selected by the user of the user terminal, wherein the information processing apparatus is further configured to receive a designation of a word to be added as a mask target word to be masked in the masking processing step of the workflow template; and add the designated word as the mask target word to the workflow template.

Optionally, in the information processing system according to the first option of the invention, the information processing apparatus is further configured to receive a designation a word to be unmasked in the workflow; and change the workflow template so the designated word to be unmasked is not masked in the masking processing step.

Optionally, in the information processing system according to the first option of the invention, the designation of the word to be unmasked is received from the administrator terminal via a results display screen displaying an output of the workflow corresponding to the workflow template applied to a sample document file.

Optionally, in the information processing system according to the first option of the invention, the designation of the word to be unmasked is made as a selection of a masked word region displayed on the results display screen.

Optionally, in the information processing system according to the first option of the invention, the designation of the word to be unmasked is received from the user terminal via a results display screen displaying an output of the workflow corresponding to the workflow template applied to the document file selected by the user of the user terminal.

Optionally, in the information processing system according to the first option of the invention, the designation of the word to be unmasked is made as a selection of a masked word region displayed on the results display screen.

Optionally, in the information processing system according to the first option of the invention, the designation of the word to be added as the mask target word is made as a selection of an unmasked word region displayed on the results display screen.

Optionally, in the information processing system according to the first option of the invention, the designation of the word to be added as the mask target word is made via entry of text in an added word region displayed on a masking settings screen.

Optionally, in the information processing system according to the first option of the invention, the designation of the word to be unmasked is received from the user terminal via a results display screen displaying an output of the workflow corresponding to the workflow template applied to a sample document file.

Optionally, in the information processing system according to the first option of the invention, the designation of the word to be added as the mask target word is made via entry of text in an added word region displayed on a masking settings screen.

According to a second aspect of the present invention, it is provided an information processing apparatus for an information processing system for an automated document masking workflow processing, the apparatus comprising a communication interface to connect to an administrator terminal and a user terminal via a network; and a processor configured to execute a workflow corresponding to a workflow template on a document file selected by a user of the user terminal, the workflow template including a masking processing step to mask predefined personal information; receive a designation of a word to be added as a mask target word to be masked in the masking processing step of the workflow template; and add the designated word as the mask target word to the workflow template.

Optionally, in the information processing apparatus according to the second aspect of the invention, the processor is further configured to receive a designation a word to be unmasked in the workflow; and change the workflow template so the designated word to be unmasked is not masked in the masking processing step.

Optionally, in the information processing apparatus according to the second aspect of the invention, the designation of the word to be unmasked is received from the administrator terminal via a results display screen displaying an output of the workflow corresponding to the workflow template applied to a sample document file.

Optionally, in the information processing system according to the second option of the invention, the designation of the word to be unmasked is made as a selection of a masked word region displayed on the results display screen.

Optionally, in the information processing apparatus according to the second aspect of the invention, the designation of the word to be unmasked is received from the user terminal via a results display screen displaying an output of the workflow corresponding to the workflow template applied to the document file selected by the user of the user terminal.

Optionally, in the information processing apparatus according to the second aspect of the invention, the designation of the word to be unmasked is made as a selection of a masked word region displayed on the results display screen.

Optionally, in the information processing apparatus according to the second aspect of the invention, the designation of the word to be added as the mask target word is made as a selection of an unmasked word region displayed on the results display screen.

Optionally, in the information processing apparatus according to the second aspect of the invention, the designation of the word to be added as the mask target word is made via entry of text in an added word region displayed on a masking settings screen.

Optionally, in the information processing apparatus according to the second aspect of the invention, the designation of the word to be unmasked is received from the user terminal via a results display screen displaying an output of the workflow corresponding to the workflow template applied to a sample document file.

Optionally, in the information processing apparatus according to the second aspect of the invention, the designation of the word to be added as the mask target word is made via entry of text in an added word region displayed on a masking settings screen.

According to a third aspect of the invention, it is provided an information processing method for an information processing system for an automated document masking workflow processing, the method comprising executing, on a workflow management server, a workflow corresponding to a workflow template on a document file selected by a user of the user terminal, the workflow template including a masking processing step to mask predefined personal information; receiving a designation of a word to be added as a mask target word to be masked in the masking processing step of the workflow template; and add the designated word as the mask target word to the workflow template.

Optionally, the information processing method according to the third aspect of the invention further comprises receiving a designation a word to be unmasked in the workflow; and changing the workflow template so the designated word.

### BRIEF DESCRIPTION OF THE DRAWINGS

FIG. 1 is a block diagram of a service providing system according to an embodiment.
FIG. 2 is a block of a workflow management server.
FIG. 3 is a block diagram of an administrator terminal.
FIG. 4 is a block diagram of a user terminal.
FIG. 5 is a sequence diagram illustrating a workflow template creation processing operation.
FIGs. 6 and 7 illustrate an example of a workflow template creation processing operation executed by a processor of a workflow management server. FIG. 8 is a diagram illustrating an example of a personal information mask processing setting screen.
FIG. 9 is a diagram illustrating an example of a personal information mask processing result confirmation screen.
FIG. 10 is a diagram illustrating an example of a result image.
FIG. 11 is a diagram illustrating an example of a personal information mask processing setting screen.
FIG. 12 is a diagram illustrating an example of a result image.
FIG. 13 is a sequence diagram illustrating a workflow template execution processing operation.
FIG. 14 illustrates aspects of a workflow template execution processing operation.
FIG. 15 is a diagram illustrating an example of a cloud service list screen displayed on a user terminal when a storage destination is designated.

### DETAILED DESCRIPTION

Embodiments provide a technological improvement to existing related-art systems, apparatuses, and methods by incorporation of additional components, configurations, and/or processes to prevent omission of mask processing of sensitive information during execution of a preset workflow involving electronic document processing, generation, storage, and/or handling.

In general, according to one embodiment, an information processing system includes an administrator terminal configured to permit an administrator to create a workflow template including a masking processing step to mask predefined personal information, a user terminal configured to permit a user to request execution of a workflow corresponding to the workflow template created by the administrator, and an information processing apparatus. The information processing apparatus is configured to communicate with the administrator terminal and the user terminal via a network and execute the workflow corresponding to the workflow template on a document file selected by the user of the user terminal. The information processing apparatus is further configured to receive a designation of a word to be added as a mask target word to be masked in the masking processing step of the workflow template, and add the designated word as the mask target word to the workflow template.

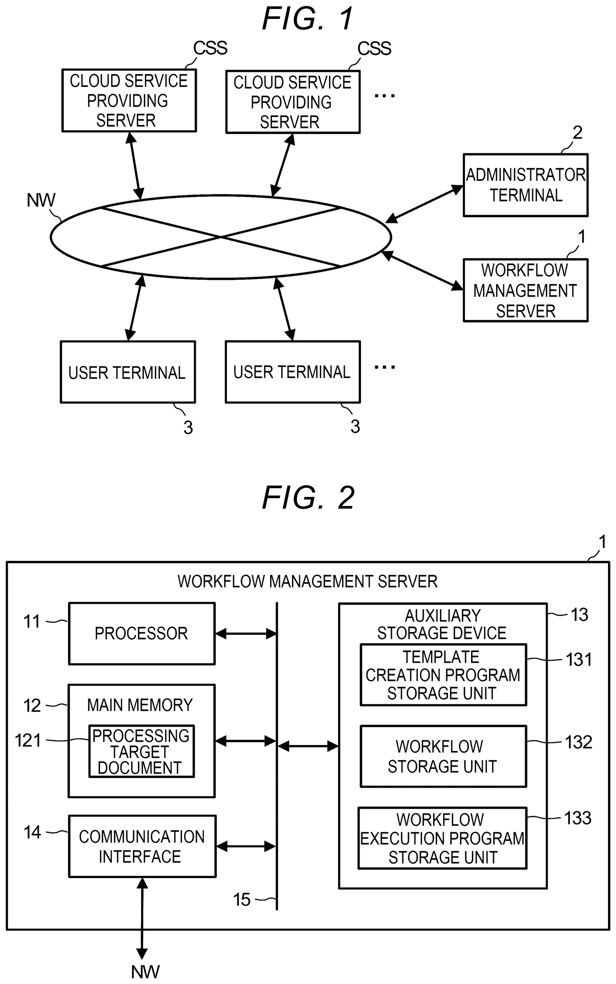

FIG. 1 is a block diagram illustrating an example of an overall configuration of a service providing system according to the embodiment. In the present embodiment, the service providing system includes a workflow management server 1, at least one administrator terminal 2, and a plurality of user terminals 3, which are connected via a network NW such as the Internet. In the present example, the service providing system provides a service involving performing a task on a document file from a user terminal 3 according to preset workflow scheme then uploading processed document file (or a task result) to one or more cloud service providing server CSS.

The workflow management server 1 manages a plurality of predefined workflows. The workflow management server 1 provides, for example, a template setting site and a capture site. The template setting site receives, from the administrator terminal 2, a registration and an editing setting of a template job to be applied to a defined workflow. In this example, the template includes setting for a personal information masking process. The capture site allows a user to log in from the user terminal 3, select a workflow to be performed, and upload files to be processed from a local storage or a camera provided in the user terminal 3. The capture site also causes the user terminal 3 to display additional information such as a history or status of the executed job(s) and processing results for result confirmation. For example, the workflow processing may include mask processing, optical character recognition (OCR) recognition, and the like. The workflow management server 1 performs data management, such as tracking a template setting, and performs execution and management of the template jobs and personal information mask processing.

The administrator terminal 2 is operated by a specific administrator, such as a service dealer, a service person, or an account administrator. In the present example, the administrator (user of the administrator terminal 2) is a creator of a workflow template. The administrator terminal 2 functions as a client of the workflow management server 1 to permit creation of a template to be applied to a workflow process.

Each of the user terminals 3 is a terminal that can be operated by a user without administrator level authority. The user terminals 3 function as a client of the workflow management server 1 and designates or causes a particular workflow to which a workflow template is applied to be executed.

Each of the cloud service providing servers CSS in this example provides a cloud storage associated with a user account for separate users who have generally registered in advance with a respective cloud service operating at least one of the cloud service providing servers CSS.

The workflow management server 1 may be an information processing device, such as a server computer. FIG. 2 is a block diagram illustrating an example of a configuration of the workflow management server 1. As illustrated in FIG. 2, the workflow management server 1 includes a processor 11, a main memory 12, an auxiliary storage device 13, and a communication interface 14. These units are connected to each other via a bus line 15, such as a data bus.

The processor 11 is, for example, a central processing unit (CPU), but is not limited thereto. The processor 11 may be a multi-core or multi-threaded processor, and can execute a plurality of pieces of processing in parallel. The processor 11 may be a micro-processing unit (MPU). The processor 11 has a function of controlling the overall operation of the workflow management server 1. The processor 11 may include an internal memory, various interfaces, and the like. The processor 11 implements various types of processing by executing programs stored in advance in the internal memory, the auxiliary storage device 13, or the like.

Some of the various functions described in the present example as being implemented by the processor 11 executing software programs may be implemented instead as various types of hardware circuits, including integrated circuits such as an application specific integrated circuit (ASIC), a digital signal processor (DSP), a field-programmable gate array (FPGA), a graphics processing unit (GPU), a system on a chip (SoC), and a programmable logic device (PLD). In this case, the processor 11 controls the execution of functions by the hardware circuit(s).

The main memory 12 is a volatile memory. The main memory 12 is a working memory or a buffer memory. The main memory 12 can store various application programs based on commands from the processor 11. In addition, the main memory 12 can include a temporary storage unit that stores data required for executing a control program and an application program stored in the auxiliary storage device 13, execution results of the programs, and the like. The temporary storage unit stores, for example, a processing target document 121 transmitted from the user terminal 3 via the network NW.

The auxiliary storage device 13 is a non-volatile internal storage in which data can be written and rewritten. As the auxiliary storage device 13, for example, an inexpensive storage device having low fault tolerance, such as a hard disk drive (HDD), a solid state drive (SSD), or a flash memory, can be adopted. The auxiliary storage device 13 stores a control program, an application program, various types of data, and the like according to operation requirements of the workflow management server 1. For example, the auxiliary storage device 13 includes a template creation program storage unit 131, a workflow storage unit 132, and a workflow execution program storage unit 133.

The template creation program storage unit 131 stores a template creation program for permitting the processor 11 to create a template to be applied to a workflow in response to an instruction from the administrator terminal 2. The template creation program can present a creation screen on the administrator terminal 2 for creating a template for receiving a mask designation of personal information. The template creation program permits the administrator to create a template interactively by operations on the administrator terminal 2. In the present embodiment, the workflow involves a task of uploading a file to a designated folder of a cloud storage provided by a cloud service providing server CSS, and the associated template provides setting information for personal information masking processing to be performed on the file to be uploaded. In other words, the template creation program in this example is a software program for providing a template setting site to be accessed by an administrator.

The workflow storage unit 132 stores a plurality of predefined workflows. In particular, the workflow storage unit 132 stores a workflow template according to instructions from the administrator by an operation of the administrator terminal 2. The workflow template can be applied to one or more predefined workflows and provides such things as settings, designations, selections, values, or the like for variables, options, optional parameters, or the like related to workflow task processing and the like.

The workflow execution program storage unit 133 stores a workflow execution program which causes the processor 11 to receive a selection of a workflow template to be executed from the user terminal 3 and to execute the selected workflow template in conjunction with an associated workflow. In other words, the workflow execution program is a software program for providing a capture site.

The communication interface 14 is an interface for communicating with the administrator terminal 2, the user terminal 3, the cloud service providing server CSS, and other external devices on the network NW.

The workflow management server 1 may have any configuration in addition to that illustrated in FIG. 2. For example, the workflow management server 1 can include a reader device for reading information from a recording medium storing various types of information, such as programs and data. The programs stored in the recording medium may include the template creation program and/or the workflow execution program.

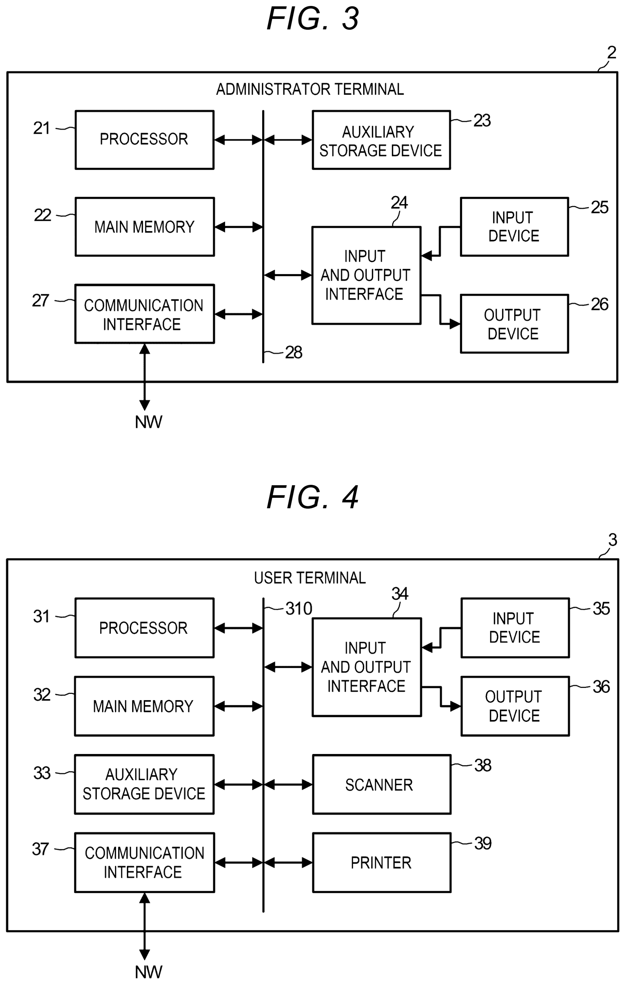

The administrator terminal 2 may be an information processing device such as a personal computer. FIG. 3 is a block diagram illustrating an example of a configuration of the administrator terminal 2. As illustrated in FIG. 3, the administrator terminal 2 includes a processor 21, a main memory 22, an auxiliary storage device 23, an input and output interface 24, an input device 25, an output device 26, and a communication interface 27. The processor 21, the main memory 22, the auxiliary storage device 23, the input and output interface 24, and the communication interface 27 are connected to each other via a bus line 28, such as a data bus. The input device 25 and the output device 26 are connected to the input and output interface 24. The administrator terminal 2 may have any configuration in addition to that illustrated in FIG. 3. In some examples, depicted configuration in FIG. 3 may be omitted.

The processor 21 is, for example, a CPU, but is not limited thereto. The processor 21 may be a multi-core or multi-threaded processor, and can execute a plurality of pieces of processing in parallel. The processor 21 may be an MPU. The processor 21 has a function of controlling the overall operation of the administrator terminal 2. The processor 21 may include an internal memory, various interfaces, and the like. The processor 21 implements various types of processing by executing programs stored in advance in the internal memory, the auxiliary storage device 23, or the like. A part of various functions described as implemented by the processor 21 executing programs may instead be implemented by various types of hardware circuits, including integrated circuits such as ASIC, a DSP, an FPGA, a GPU, an SoC, and a PLD. In this case, the processor 21 controls execution of the functions performed by the hardware circuit(s).

The main memory 22 is a volatile memory. The main memory 22 is a working memory. The main memory 22 can store various application programs based on commands from the processor 21. The main memory 22 can store data required for executing a control program and an application program stored in the auxiliary storage device 23, execution results of the programs, and the like.

The auxiliary storage device 23 is a non-volatile internal storage in which data can be written and rewritten. The auxiliary storage device 23 stores the control program, the application program, various types of data, and the like according to operational requirements of the administrator terminal 2. For example, the auxiliary storage device 23 stores, as one of the application programs, a program that permits functions as a client of the workflow management server 1 and causes the workflow management server 1 to create the workflow template as instructed by the administrator. For example, when the template creation program of the workflow management server 1 is a program providing a predetermined creation screen as a Web page, the program stored in the auxiliary storage device 23 may be a program for providing a Web browser or functions thereof.

The input and output interface 24 is an interface for connecting to the input device 25 and the output device 26. The input device 25 is used by the administrator to input instructions and information required for an operation of the administrator terminal 2. The input device 25 includes, for example, a keyboard and a pointing device such as a mouse and a touch pad. The input device 25 can include a touch panel, operation buttons, and the like disposed on a display screen of the output device 26. The input device 25 can include a reader device for reading information from a recording medium. The output device 26 includes a display screen or the like that displays various types of information generated by the administrator terminal 2, such as a liquid crystal monitor, an organic electroluminescence (EL) monitor, a projector screen, or a head-mounted display. The output device 26 may include a speaker that transmits various types of information to the administrator as sound. The output device 26 can further include a writer device for writing the information generated by the administrator terminal 2 to a recording medium.

The communication interface 27 is an interface for communicating with the workflow management server 1 across the network NW.

Like the administrator terminal 2, the user terminal 3 can be an information processing device such as a personal computer. In this case, the configuration of the user terminal 3 may be similar to that of the administrator terminal 2. The auxiliary storage device 33 stores an application program that permits the user terminal 3 to function as a client of the workflow management server 1 and execute a workflow template. For example, when the workflow execution program of the workflow management server 1 is a program for providing a predetermined screen as a Web page for executing a workflow, the program stored in the auxiliary storage device 33 may be a program for providing a Web browser or functions thereof. The predetermined screen provided as a Web page may permit the user of the user terminal 3 to make a selection of the workflow template to be executed, designate a processing target document file (the file to be processed in the executed workflow), and select the particular cloud service to be the storage destination for the processed file (the workflow result/output).

In some examples, user terminal 3 may be an image forming apparatus such as a multi-function peripheral (MFP) having a scanner function, a printer function, a copy function, a network communication function, a facsimile communication function, and the like. FIG. 4 is a block diagram illustrating an example of a configuration of the user terminal 3 in this case. As illustrated in FIG. 4, the user terminal 3 includes a processor 31, a main memory 32, the auxiliary storage device 33, an input and output interface 34, an input device 35, an output device 36, a communication interface 37, a scanner 38, and a printer 39. The processor 31, the main memory 32, the auxiliary storage device 33, the input and output interface 34, the communication interface 37, the scanner 38, and the printer 39 are connected to each other via a bus line 310, such as a data bus. The input device 35 and the output device 36 are connected to the input and output interface 34. In some examples, user terminal 3 may have configuration or components in addition to those illustrated in FIG. 4, or certain configuration or components depicted in FIG. 4 may be omitted.

The processor 31, the main memory 32, the auxiliary storage device 33, the input and output interface 34, the input device 35, the output device 36, the communication interface 37, and the bus line 310 may be similar, in general, to the processor 21, the main memory 22, the auxiliary storage device 23, the input and output interface 24, the input device 25, the output device 26, the communication interface 27, and the bus line 28 of the administrator terminal 2.

The scanner 38 scans a paper document to acquire an image file. The image file can be stored in the auxiliary storage device 33, supplied from another user terminal 3 via the network NW, or transmitted to the workflow management server 1 via the network NW to be used as a processing target document file.

The printer 39 forms an image on a recording medium, such as a print sheet, based on print data. The print data can be supplied from another user terminal 3 via the network NW or otherwise. The print data may be an image of the paper document acquired by the scanner 38, and in this case, the user terminal 3 functions as a copier of the paper document read by the scanner 38.

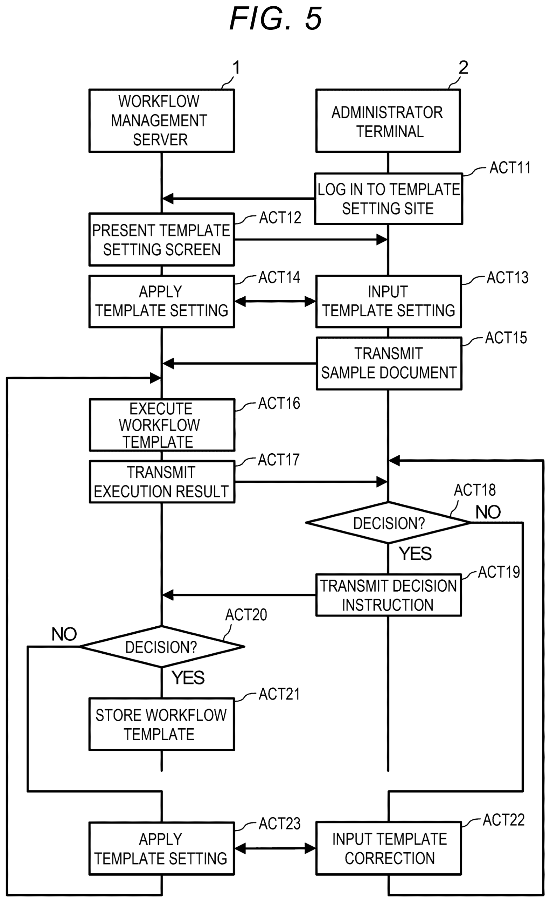

FIG. 5 is a sequence diagram illustrating a workflow template creation processing operation in the service providing system of an embodiment.

When the administrator of a workflow instructs, from the administrator terminal 2, the workflow management server 1 to execute the template creation program, a predetermined login screen for a template creation site or a template setting site provided by the workflow management server 1 is displayed on the administrator terminal 2. Here, the administrator logs in to the workflow management server 1 with an administrator ID via the login screen (ACT 11).

When the administrator logs in this way, the workflow management server 1 transmits a template setting screen to the administrator terminal 2 and causes the administrator terminal 2 to present the template setting screen (ACT 12).

On the template setting screen, the administrator can select a workflow to be used and input various settings for the template to be applied to the workflow (ACT 13).

In response to a user input transmitted from the administrator terminal 2, the workflow management server 1 creates a workflow template in which the settings of the user created template are applied to the selected workflow (ACT 14).

When the setting of the template is completed and the workflow template has been created in this way, the administrator then transmits a sample document file for verification from the administrator terminal 2 to the workflow management server 1 to verify the workflow template functions as intended (ACT 15).

The workflow management server 1 executes the created workflow template with the sample document file as a processing target (ACT 16). Then, the workflow management server 1 transmits an execution result to the administrator terminal 2 (ACT 17).

The administrator terminal 2 displays the execution result for verification by the administrator. When the created workflow template is decided to be a completed version by the administrator (YES in ACT 18), a decision instruction is sent to the workflow management server 1 from the administrator terminal 2 (ACT 19).

When the decision instruction from the administrator terminal 2 is received (YES in ACT 20), the workflow management server 1 next stores the created workflow template in the workflow storage unit 132 (ACT 21).

On the other hand, if the administrator decides the template is not completed yet (NO in ACT 18) or there needs to be a correction made to the template, the administrator terminal 2 provides additional inputs to the workflow management server 1 to correct the template according to the correction inputs by the administrator (ACT 22).

The workflow management server 1 corrects the template according to the correction inputs transmitted from the administrator terminal 2, and creates a revised/corrected workflow template according to the corrected settings(ACT 23).

After the corrected workflow template is created, the workflow management server 1 executes the corrected workflow template with the sample document file again as the processing target (ACT 16). That is, the correction and the verification of the template are repeated until a workflow template created by the administrator is determined as the completed version.

In the following, a workflow template creation processing operation in the workflow management server 1 will be described for an example in which a template for masking personal or sensitive information in a document is created.

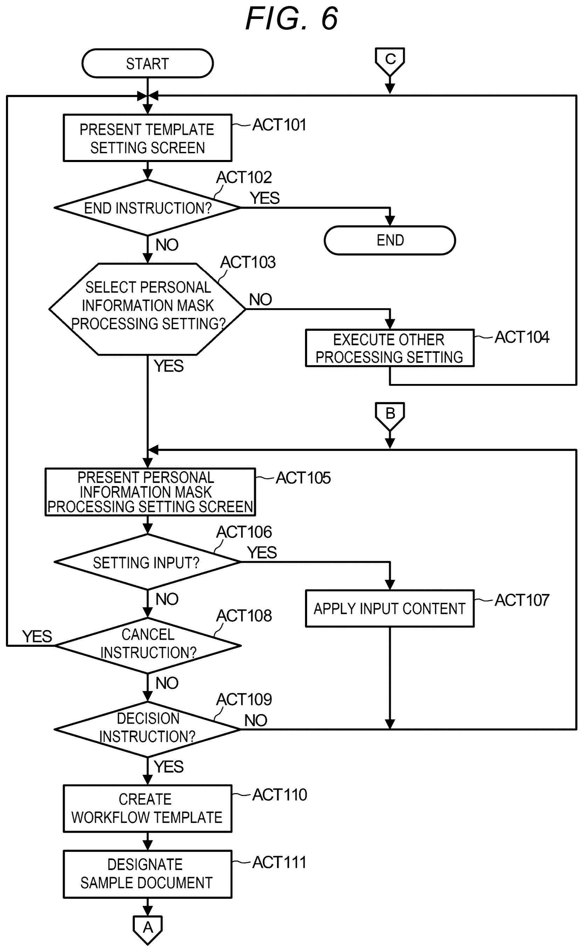

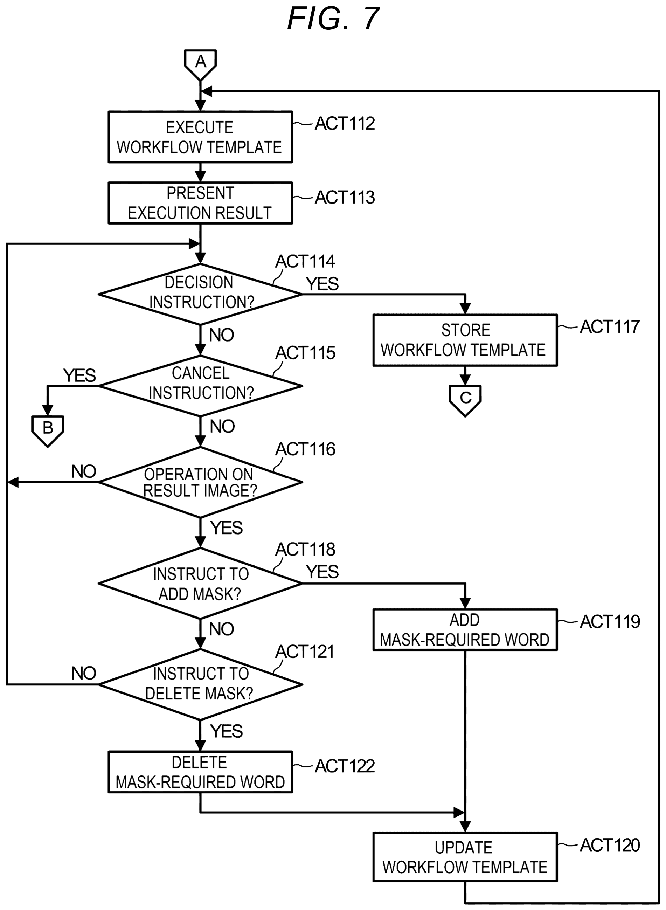

FIGS. 6 and 7 are flowcharts illustrating an example of the workflow template creation processing operation executed by the processor 11 of the workflow management server 1. FIGS. 6 and 7 illustrate operations after the administrator logs in using an administrator ID. The processor 11 can perform the workflow template creation processing operation by executing the template creation program as a control program stored in the template creation program storage unit 131 of the auxiliary storage device 13.

In ACT 101, the processor 11 causes the output device 26 of the administrator terminal 2 to present a template setting screen by transmitting screen data for the template setting screen to the administrator terminal 2 via the network NW by the communication interface 14.

In ACT 102, the processor 11 determines whether an end instruction is input on the template setting screen. Specifically, the processor 11 receives an operation result transmitted from the administrator terminal 2 via the network NW by the communication interface 14, and determines whether the end instruction is input on the template setting screen. Generally, the template setting screen includes an "end" button or the like for instructing an end to the processing. When a predetermined input operation, such as a click operation of a mouse as the input device 25 in the administrator terminal 2, is performed, coordinate values indicating an operation position are transmitted from the administrator terminal 2, and the processor 11 acquires the coordinate values via the communication interface 14. Then, the processor 11 can determine whether the end instruction is input by determining whether the acquired coordinate values correspond to coordinates of the "end" button on the template setting screen. If the end instruction is input, the processor 11 determines YES in ACT 102 and ends the workflow template creation processing operation. If the end instruction is not input, the processor 11 determines NO in ACT 102 and proceeds to processing in ACT 103.

In ACT 103, the processor 11 receives operations transmitted from the administrator terminal 2, and determines whether the personal information mask processing setting was selected on the template setting screen. Generally, the template setting screen presents a plurality of menu options or the like including as an one option a way to make personal information mask processing settings. The presentation of options format is not particularly limited here. For example, a plurality of processing setting options may be presented as a list, and the processing may immediately proceed to the selected processing setting after the selecting of one of the options. In some examples, a series of setting screen for receiving settings for each of the processing setting options in turn may be presented sequentially one by one. If an option other than the personal information mask processing setting is selected, the processor 11 determines NO in ACT 103 and proceeds to ACT 104 ("Execute other processing setting"). If the personal information mask processing setting is selected, the processor 11 determines YES in ACT 103 and proceeds to processing in ACT 105.

In ACT 104, the processor 11 executes processing related to settings other than personal information mask processing. When the other processing setting is completed (ended), the processor 11 returns to ACT 101.

In ACT 105, the processor 11 causes the output device 26 of the administrator terminal 2 to present a personal information mask processing setting screen by transmitting screen data for the personal information mask processing setting screen to the administrator terminal 2 via the network NW.

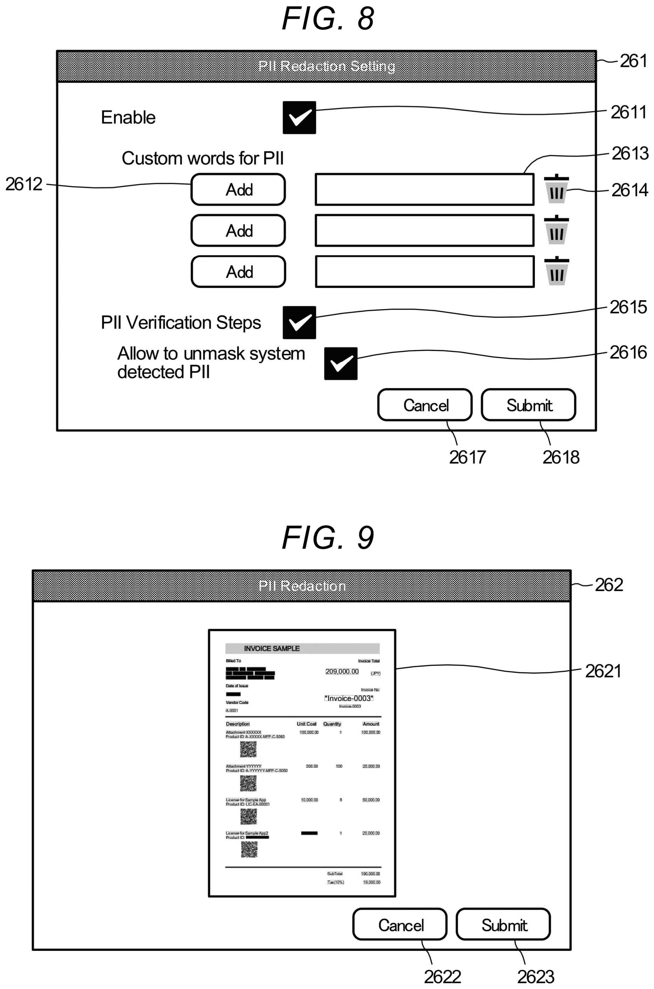

FIG. 8 is a diagram illustrating an example of a personal information mask processing setting screen 261 presented on the administrator terminal 2. As illustrated in FIG. 8, the personal information mask processing setting screen 261 can include a personal information protection enable checkbox 2611, an "Add" button 2612, a word input field 2613, an input word deletion icon 2614, a processing result verification permission instruction checkbox 2615, a system-detected personal information deletion permission checkbox 2616, a "Cancel" button 2617, and a "Submit" button 2618.

The personal information protection enable checkbox 2611 is a checkbox for setting enabling or disabling of processing related to protection of personal information and is checked when the protection of the personal information is enabled. When the personal information protection enable checkbox 2611 is not checked (and thus the personal information protection processing is disabled), the "Add" button 2612, the word input field 2613, the input word deletion icon 2614, the processing result verification permission instruction checkbox 2615, and the system-detected personal information deletion permission checkbox 2616 can be grayed out and disabled (made non-selectable/operable for the user). The word input field 2613, the input word deletion icon 2614, and the system-detected personal information deletion permission checkbox 2616 maintain a grayout state even when the personal information protection enable checkbox 2611 is checked and personal information protection is enabled.

The "Add" button 2612 is a button on which a predetermined pressing operation, such as a click operation of a mouse (input device 25) of the administrator terminal 2, is performed for adding a word (a custom word) to serve as a mask target word. After a pressing operation is performed on the "Add" button 2612, the word input field 2613 and the input word deletion icon 2614 are enabled.

The word input field 2613 is an input field for inputting any word to be designated as the mask target word by a keyboard operation on the input device 25 in the administrator terminal 2. In addition to the knowledge and experience of the administrator, the administrator may understand that a word needs to be masked by hearing from an end user of the workflow. Therefore, the administrator can create a workflow template in which the mask processing on the personal information is customized for a specific user by inputting a word or the like in the word input field 2613.

The input word deletion icon 2614 is an icon for inputting an instruction to delete (clear) the word that was previously input to the word input field 2613. When a predetermined designation operation, such as a mouse click operation, is performed on the input word deletion icon 2614, the word input field 2613 is cleared of input.

The processing result verification permission instruction checkbox 2615 ("PII Verification Steps") is a checkbox for setting whether the user is permitted to confirm (check) the execution result of the workflow template and correct the template, and is checked in the case of permission. When the processing result verification permission instruction checkbox 2615 is checked, the system-detected personal information deletion permission checkbox 2616 is enabled.

The system-detected personal information deletion permission checkbox 2616 ("Allow to unmask system detected PII") is a checkbox for setting whether to permit identified masking targets to be excluded when the user judges such to be appropriate upon review of the execution result of the workflow template and corrects the template accordingly. The word to be deleted in this case may be a word that was set in the workflow in advance, a word that was additionally set by the administrator as a mask target, or a word newly added by the user as a mask target. In general, a word newly added by the user as a mask target may always be deleted from the mask targeting regardless of whether the system-detected personal information deletion permission checkbox 2616 is checked.

The "Cancel" button 2617 is a button operated when cancelling setting contents on the personal information mask processing setting screen 261.

The "Submit" button 2618 is a button operated when deciding the setting contents on the personal information mask processing setting screen 261 are to be used for creating a workflow template to which the settings are applied.

Referring back to FIG. 6, in ACT 106, the processor 11 receives the operations from the administrator terminal 2 via the network NW, and determines whether any setting input was performed on the personal information mask processing setting screen 261. That is, the processor 11 determines whether inputs or changes were made to the personal information protection enable checkbox 2611, the "Add" button 2612, the word input field 2613, the input word deletion icon 2614, the processing result verification permission instruction checkbox 2615, and/or the system-detected personal information deletion permission checkbox 2616. If an operation other than those related to the setting input is received, the processor 11 determines that an operation other than setting input was performed, thus determines NO in ACT 106, and proceeds to processing in ACT 108. If the setting input is performed, the processor 11 determines YES in ACT 106, and proceeds to processing in ACT 107.

In ACT 107, the processor 11 applies the input content corresponding to setting input made via the personal information mask processing setting screen 261. Specifically, the input content is reflected in a setting of the template stored in the temporary storage unit of the main memory 12. Thereafter, the processor 11 proceeds to ACT 105 and causes the administrator terminal 2 to present the personal information mask processing setting screen 261 to which the input content has been applied.

In ACT 108, the processor 11 receives the operation from the administrator terminal 2 via the network NW, and determines whether a cancel instruction by the operation of the "Cancel" button 2617 on the personal information mask processing setting screen 261 was performed. If the "Cancel" button 2617 was operated, the processor 11 determines that the cancel instruction was performed, determines YES in ACT 108, discards the input content provided up to the cancellation time, and proceeds to the processing in ACT 101. If an operation other than the "Cancel" button 2617 is received, the processor 11 determines NO in ACT 108 and proceeds to processing in ACT 109.

In ACT 109, the processor 11 receives the operation from the administrator terminal 2 via the network NW, and determines whether the "Submit" button 2618 on the personal information mask processing setting screen 261 was operated. If not, the processor 11 determines NO in ACT 109 and proceeds to the processing in ACT 105. If yes, the processor 11 determines YES in ACT 109, and proceeds to processing in ACT 110.

In ACT 110, the processor 11 creates the workflow template by applying, to the selected workflow, the template stored in the temporary storage unit of the main memory 12 while reflecting the content specifically set via the personal information mask processing setting screen 261. The processor 11 stores the created workflow template in the temporary storage unit of the main memory 12.

In ACT 111, the processor 11 receives a designation of a sample document from the administrator terminal 2. Specifically, the processor 11 receives the sample document file transmitted from the administrator terminal 2 via the network NW. Alternatively, the processor 11 may transmit a list of sample document files prepared in advance and stored in the auxiliary storage device 13 to the administrator terminal 2, and receive a selection of the sample document file from the list from the administrator.

In ACT 112, the processor 11 executes the workflow template stored in the temporary storage unit of the main memory 12 with the designated sample document file as the processing target.

In ACT 113, the processor 11 causes the output device 26 of the administrator terminal 2 to present a workflow template execution result on a personal information mask processing result confirmation screen.

FIG. 9 is a diagram illustrating an example of a personal information mask processing result confirmation screen 262 displayed on the administrator terminal 2. As illustrated in FIG. 9, the personal information mask processing result confirmation screen 262 can include a result image 2621, a "Cancel" button 2622, and a "Submit" button 2623.

The result image 2621 depicts the result of executing the workflow template on the sample document file. By selecting a particular word or words in the result image 2621, the particular word or words can be set as a mask target for subsequent executions of the workflow template.

The "Cancel" button 2622 is a button operated when cancelling setting contents on the personal information mask processing result confirmation screen 262.

The "Submit" button 2623 is a button operated when deciding the corrections made via the personal information mask processing result confirmation screen 262 are to be incorporated as a corrected workflow template.

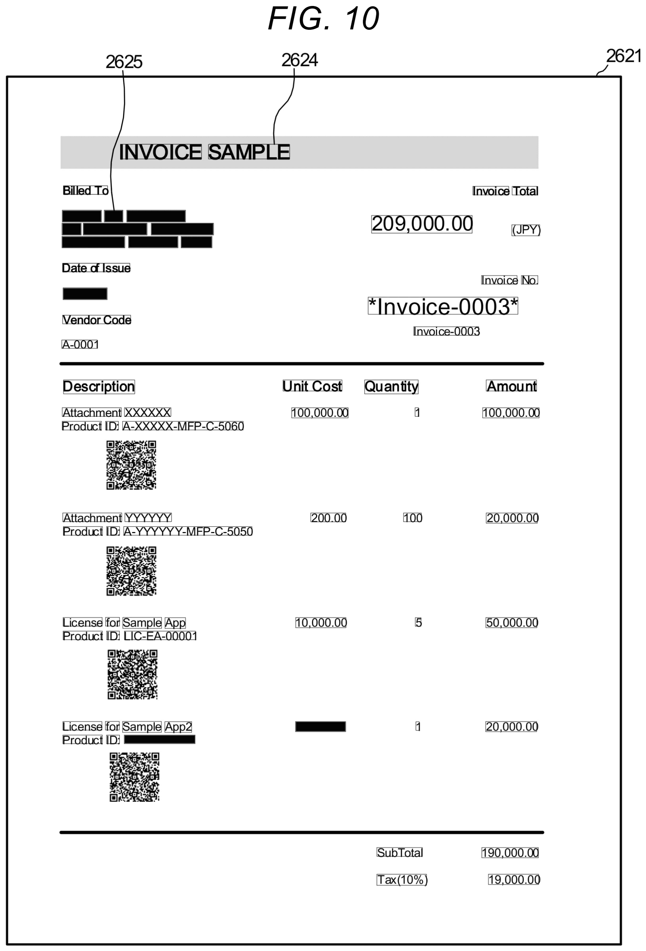

FIG. 10 is a diagram illustrating an example of the result image 2621 shown on the personal information mask processing result confirmation screen 262. In this example, by executing the workflow template with the sample document file, the processor 11 performs OCR processing on the sample document file to identify words or may identify words in the document using artificial intelligence (AI). The processor 11 presents a word discrimination result to the administrator by adding a frame line 2624 around identified/recognized words. The processor 11 can perform the mask processing and put a mask 2625 over a word designated as a personal information protection target in the workflow or a mask target word input to word input field 2613 on the personal information mask processing setting screen 261 when such words are identified as being among the discriminated words in the document. The example illustrated in FIG. 10 corresponds to the personal information mask processing setting screen 261 illustrated in FIG. 8.

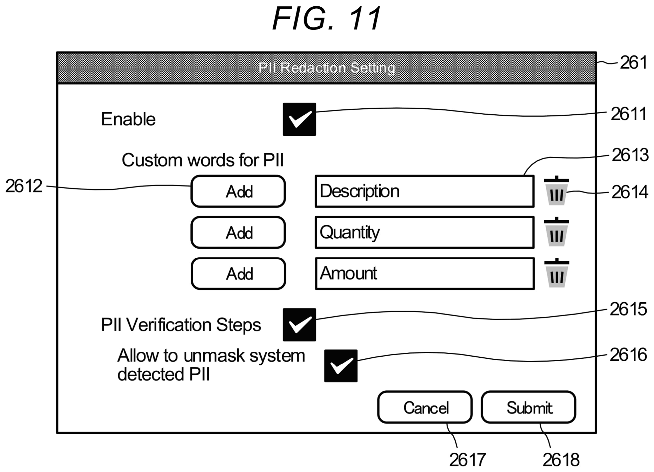

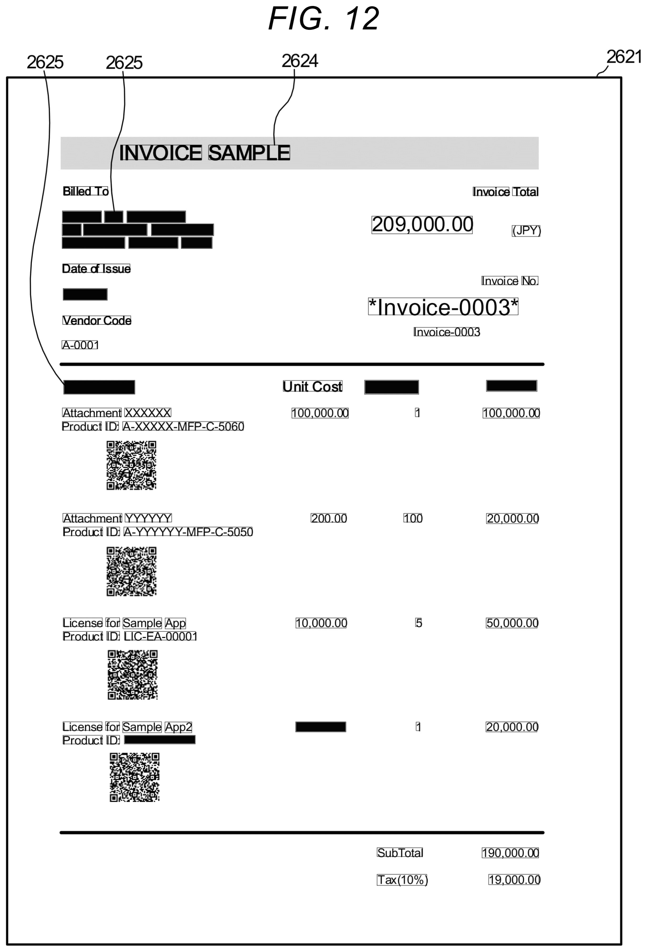

FIG. 11 is a diagram illustrating an example of the personal information mask processing setting screen 261 displayed on the administrator terminal 2. FIG. 12 is a diagram illustrating an example of the result image 2621 on the personal information mask processing result confirmation screen 262, which corresponds to the personal information mask processing setting screen 261 illustrated in FIG. 11. As illustrated in FIG. 11, when the words "Description", "Quantity", and "Amount" are input in a word input field 2613 on the personal information mask processing setting screen 261, as illustrated in FIG. 12, the mask 2625 will be attached to these words as the mask target words.

In the present embodiment, by designating words on the personal information mask processing result confirmation screen 262, it is possible to add mask target words and cause such words to be masked in the output/processed document. It is also possible to designate a word to be excluded from the mask targeting, that is, to cause a word not to be targeted by the masking process that might otherwise be targeted.

In some examples, as a method for designating a word to be an additional mask target word, a click operation may be performed on a frame line 2624 of the word in the result image 2621 with a mouse as the input device 25 at the administrator terminal 2. As a method for designating the deletion or de-targeting of a mask target word a click operation may be performed on the mask 2625 covering the word in the result image 2621 by a mouse at the administrator terminal 2. Of course, these are merely examples of possible input and selection operations. A range or document region may be designated by clicking the mouse and performing a drag operation. If the range/region contains a word with the frame line 2624, the word may be added as a mask target word by such an addition designation, and if the range/region contains a mask 2625 over a word, the word may be removed (deleted) as a mask target word by such a deletion designation.

Referring back to FIG. 7, after causing the administrator terminal 2 to present the execution result in ACT 113, the processor 11 executes reception waiting processing of waiting for the reception of the operation result transmitted from the administrator terminal 2 via the network NW by the communication interface 14, which is indicated by a loop of ACT 114 to ACT 116.

In ACT 114, the processor 11 determines whether the "Submit" button 2623 was selected on the personal information mask processing result confirmation screen 262 14. If the selection of the "Submit" button 2623 is received, the processor 11 determines YES in ACT 114, and proceeds to processing in ACT 117. If selection of the "Submit" button 2623 is not received, the processor 11 determines NO in ACT 114 and proceeds to processing in ACT 115.

In ACT 115, the processor 11 determines whether the "Cancel" button 2622 on the personal information mask processing result confirmation screen 262 was selected. If the "Cancel" button 2622 was selected, the processor 11 determines YES in ACT 115, discards the previously input template setting content up to that time, and proceeds to the processing in ACT 105. If the "Cancel" button 2622 was not selected, the processor 11 determines NO in ACT 115 and proceeds to processing in ACT 116.

In ACT 116, the processor 11 determines whether an operation on the result image 2621 shown on the personal information mask processing result confirmation screen 262 has been received from the administrator terminal 2. If an operation on the result image 2621 is received, the processor 11 determines YES in ACT 116 and proceeds to processing in ACT 118. If an operation on the result image 2621 is not received, the processor 11 determines NO in ACT 116 and proceeds to the processing in ACT 114.

If the submit instruction is sent (YES in ACT 114), the processor 11 stores the workflow template currently stored in the temporary storage unit of the main memory 12 into the workflow storage unit 132 in ACT 117. Thereafter, the processor 11 proceeds to the processing in ACT 101.

If there is an operation performed on the result image 2621 (YES in ACT 116), the processor 11 determines whether the operation is an addition designation operation (e.g., a click operation at the position of the frame line 2624 of the word) in ACT 118. If an operation at a position other than a position corresponding to the frame line 2624 is received, the processor 11 determines that the operation is not an addition designation operation, determines NO in ACT 118, and proceeds to processing in ACT 121. If an operation corresponding to a frame line 2624 is received, the processor 11 determines that the operation is the addition designation operation of the mask target word, determines YES in ACT 118, and proceeds to processing in ACT 119.

In ACT 119, the processor 11 adds the word corresponding to the operation position as a mask target word in the settings of the template stored in the temporary storage unit of the main memory 12.

In ACT 120, the processor 11 updates the workflow template stored in the temporary storage unit of the main memory 12. Thereafter, the processor 11 proceeds to the processing in ACT 112, executes the updated workflow template, and causes the administrator to verify the execution result again.

On the other hand, if the operation is not an addition designation operation for a mask target word (NO in ACT 118), the processor 11 determines whether the operation was a deletion designation operation to de-target a mask target word or the like. For example, a deletion designation operation is a click operation at the position of a mask 2625 in ACT 121. If an operation position other than a position corresponding to the mask 2625 is received, the processor 11 determines that the operation is not a deletion designation operation determines NO in ACT 121, and proceeds to the processing in ACT 114. If the processor 11 determines that the operation is a deletion designation operation, the processor 11 determines YES in ACT 121, and proceeds to processing in ACT 122.

In ACT 122, the processor 11 deletes the corresponding mask target word corresponding to the user selected mask 2625 from the masking settings of the template stored in the temporary storage unit of the main memory 12. When the word subjected to the deletion designation operation is not a word that was manually added as a mask target word but rather a word set in in advance in the workflow as likely to be private, personal, or sensitive information, , the word may be expressly added to the settings of the template as a word that does not need to be masked. That is, the workflow masking settings may be overridden or the like. Thereafter, the processor 11 proceeds to the processing in ACT 120, and creates the updated workflow template by applying the changed settings to the template.

As described above, the workflow template is finally created and stored in the workflow storage unit 132 of the workflow management server 1.

Next, a case where the user uses the workflow template created in this way will be described.

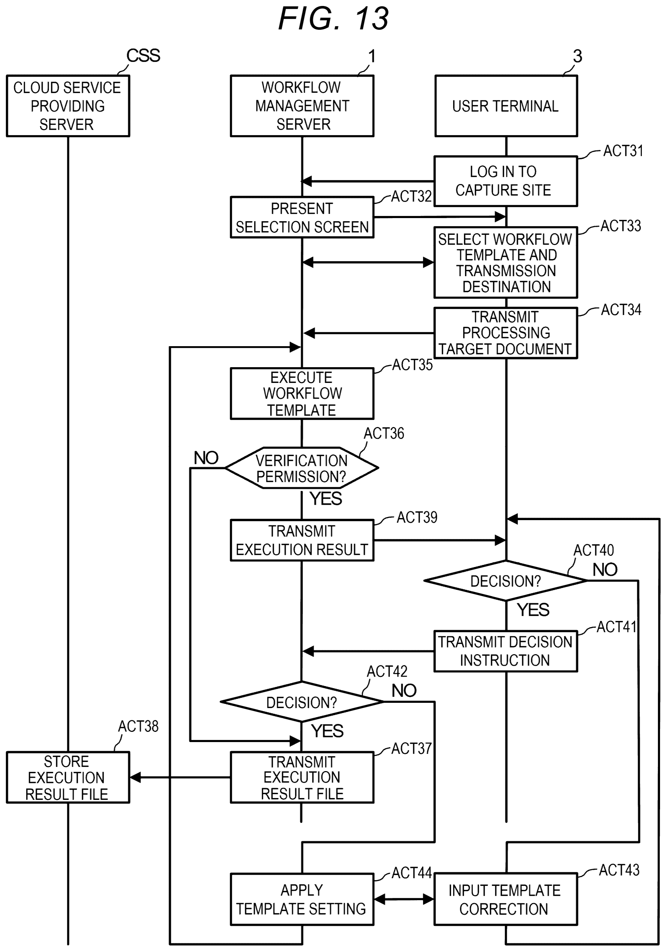

FIG. 13 is a sequence diagram illustrating a workflow template execution processing operation in the service providing system.

When the user who intends to use the workflow template instructs the workflow management server 1 to execute the workflow execution program from the user terminal 3, the predetermined login screen for the capture site provided by the workflow management server 1 is displayed on the user terminal 3. Here, the user logs in to the workflow management server 1 using a user ID on the login screen (ACT 31).

After the user logs in this way, the workflow management server 1 causes the user terminal 3 to present a selection screen of the workflow template or the like by transmitting the selection screen to the user terminal 3 (ACT 32).

The user selects the workflow template and a transmission destination via the selection screen (ACT 33). Here, the workflow template can be selected from among various workflow templates stored in the workflow storage unit 132 of the workflow management server 1. The selection of the transmission destination designates a cloud service providing server CSS to which the execution result related to the workflow template is to be uploaded. In the selection of the cloud service providing server CSS, the user can also input user information for accessing the cloud service, such as a user account name or the like.

Then, the user transmits the processing target document to the workflow management server 1 by operation of the user terminal 3 (ACT 34). For example, the user can select any document file stored in the auxiliary storage device 33 of the user terminal 3 and transmit the selected document file as the processing target document. When the user terminal 3 is an image forming apparatus as illustrated in FIG. 4, the user can scan a paper document with the scanner 38 and transmit an image file obtained by scanning the paper document as the processing target document from the user terminal 3.

The workflow management server 1 stores a selection result of the workflow template, a selection result of the cloud service providing server CSS, and the user information transmitted from the user terminal 3, in the temporary storage unit of the main memory 12. The workflow management server 1 stores the processing target document transmitted from the user terminal 3 in the temporary storage unit of the main memory 12 as the processing target document 121. Then, the workflow management server 1 then executes the workflow template that was selected by the user (ACT 35).

Here, the workflow management server 1 determines whether the workflow template includes a verification permission setting (ACT 36). As described above, when the processing result verification permission instruction checkbox 2615 is checked on the personal information mask processing setting screen 261, the verification permission is set in the template. Therefore, the workflow to which the template is applied includes the setting for verification permission. If the setting of verification permission is not included (NO in ACT 36), the workflow management server 1 transmits a file of the execution result of the workflow template to the cloud service providing server CSS, which is the transmission destination selected by the user, together with the user information (ACT 37). Accordingly, the cloud service providing server CSS stores the file of the execution result transmitted from the workflow management server 1 in the cloud storage associated with the corresponding user account based on the user information (ACT 38).

If the workflow template includes the setting for verification permission (YES in ACT 36), the workflow management server 1 transmits the execution result to the user terminal 3 (ACT 39).

The user terminal 3 presents the execution result and receives verification from the user. If the user decides to continue the task without change based on review of the execution result (YES in ACT 40), the user terminal 3 transmits a YES decision instruction to the workflow management server 1 (ACT 41).

After the workflow management server 1 receives the decision instruction from the user terminal 3 (YES in ACT 42), in this case, the workflow management server 1 continues with the task of transmitting the file of the execution result to the cloud service providing server CSS in ACT 37.

On the other hand, if there is a NO decision from the user (NO in ACT 40) and a correction input is required, in other words, a correction of the workflow template, the user terminal 3 provides instructions to the workflow management server 1 to correct the template according to the correction input at the user terminal 3 (ACT 43).

In response to the correction input transmitted from the user terminal 3, the workflow management server 1 corrects the workflow template and creates an updated/corrected workflow template to which the user corrections are applied (ACT 44).

After the corrected workflow template is created, the workflow management server 1 executes the corrected workflow template on the processing target document 121 stored in the temporary storage unit of the main memory 12 (ACT 35). That is, correction and verification of the workflow template are repeated until the user is satisfied with the execution result from the workflow template.

Hereinafter, a workflow template execution processing operation in the workflow management server 1 will be described by taking as an example a case where a workflow template for uploading the processing target document file to a cloud service providing server CSS after masking the personal information is executed.

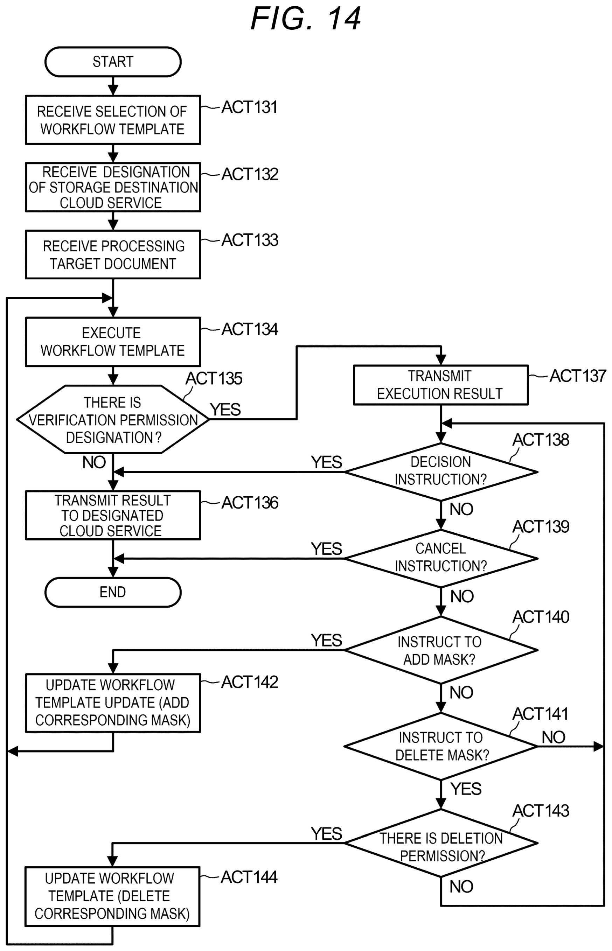

FIG. 14 is a flowchart illustrating an example of the workflow template execution processing operation executed by the processor 11 of the workflow management server 1. FIG. 14 illustrates operations after the user logs in using a user ID. The processor 11 of the workflow management server 1 can execute the workflow template execution processing operation illustrated in FIG. 14 by executing a workflow execution program stored in the workflow execution program storage unit 133 of the auxiliary storage device 13.

The user terminal 3 displays a workflow selection screen provided by the workflow management server 1 functioning as the capture site on the output device 36, and receives a selection of a workflow template to be executed by a click operation of a mouse or a touch operation of a touch panel as the input device 35 by the user. The transmission and reception of the workflow selection screen between the workflow management server 1 and the user terminal 3 are not specifically illustrated in FIG. 14. Alternatively, the workflow selection screen may be displayed by a built-in (local) program to receive the selection of the workflow template to be executed. The user terminal 3 transmits the user selection information indicating the selected workflow template to the workflow management server 1.

In ACT 131, the processor 11 of the workflow management server 1 receives the selection of the workflow template, via the network NW. Then, the processor 11 identifies the workflow template to be executed, reads the corresponding workflow template from the workflow storage unit 132, and stores the workflow template in the temporary storage unit of the main memory 12.

Similarly, the user terminal 3 receives a designation of the cloud service providing server CSS, which will be a storage destination for the workflow processing result, by a user operation on a cloud service list screen provided by the workflow management server 1 or a built-in program. The number of designated cloud services providing servers CSS may be plural. The user terminal 3 transmits a designation of the cloud service providing server CSS to the workflow management server 1.

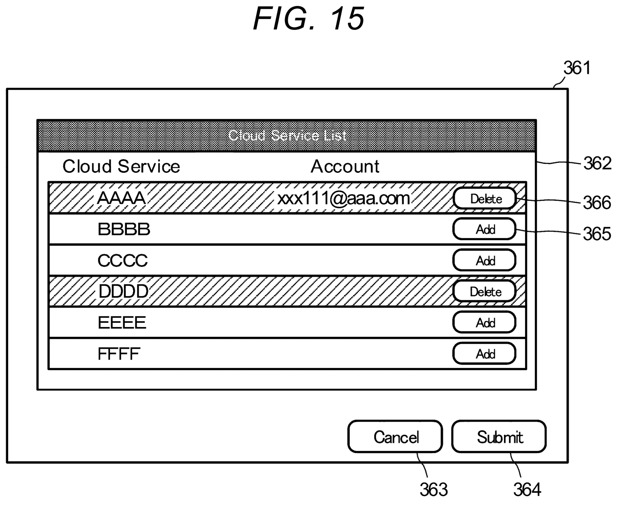

FIG. 15 is a diagram illustrating an example of a cloud service list screen 361 displayed on the user terminal 3. As illustrated in FIG. 16, the cloud service list screen 361 includes an available service list 362, a "Cancel" button 363, and a "Submit" button 364.

The available service list 362 displays a list of available cloud services registered in advance, and also displays the associated user account for logging in to those cloud services when the user account has been registered. In the available service list 362, for the cloud service designated as the storage destination, identification display, such as inversion, is performed, and a "Delete" button 366 is displayed. An "Add" button 365 is displayed for a cloud service that is not designated as the storage destination. The "Delete" button 366 is a button operated to instruct cancellation of the storage destination designation of the cloud service. The "Add" button 365 is a button operated to instruct an addition of the cloud service to the storage destination.

The "Cancel" button 363 is a button operated to cancel designated contents on the cloud service list screen 361.

The "Submit" button 364 is a button operated when the designated contents on the cloud service list screen 361 are decided and the designated contents are transmitted to the workflow management server 1.

When the user account for the designated cloud service is not yet registered, when the "Add" button 365 is operated, or when the "Submit" button 364 is operated, a screen for receiving the user account associated with the cloud service is displayed to allow the user to input the missing user account information.

In ACT 132, the processor 11 receives the designation of the storage destination cloud service. Then, the processor 11 determines the cloud service providing server CSS corresponding to the cloud service designated by the user and the user account for the cloud service, and stores a discrimination result in the temporary storage unit of the main memory 12.

Then, the user terminal 3 transmits the processing target document file to the workflow management server 1. As described above, the processing target document file to be transmitted may be received by a selection process performed by the user or may be generated by the user terminal 3.

In ACT 133, the processor 11 receives the processing target document file via the network NW, and stores the processing target document file in the main memory 12 as the processing target document 121.

In ACT 134, the processor 11 executes the workflow template selected by the user and stored in the temporary storage unit of the main memory 12 with the processing target document 121 as the processing target.

In ACT 135, the processor 11 determines whether the executed workflow template includes the setting of verification permission. If the setting of verification permission is included, the processor 11 determines YES in ACT 135 and proceeds to processing in ACT 137. If the setting of verification permission is not included, the processor 11 determines NO in ACT 135 and proceeds to processing in ACT 136.

In ACT 136, the processor 11 transmits the execution result of the workflow template to the cloud service providing server CSS. Thereafter, the processor 11 ends the workflow template execution processing operation illustrated in FIG. 14.

In ACT 137, the processor 11 causes the output device 36 of the user terminal 3 to present the execution result by transmitting the screen data of the personal information mask processing result confirmation screen to the user terminal 3. The personal information mask processing result confirmation screen may be the same as the personal information mask processing result confirmation screen 262 indicating the execution result of the workflow template for the sample document presented by the administrator terminal 2 as described with reference to FIG. 9.

After causing the user terminal 3 to present the execution result in ACT 137, the processor 11 executes the reception waiting processing, which is indicated by a loop of ACT 138 to ACT 141.

In ACT 138, the processor 11 determines whether the operation result corresponding to operation of the "Submit" button 2623 on the personal information mask processing result confirmation screen 262 is received from the user terminal 3. If the "Submit" button 2623 is pressed, the processor 11 determines YES in ACT 138, proceeds to processing in ACT 136, and transmits the execution result of the workflow template to the cloud service providing server CSS designated as the storage destination. If the "Submit" button 2623 is not pressed, the processor 11 determines NO in ACT 138 and proceeds to processing in ACT 139.

In ACT 139, the processor 11 determines whether the "Cancel" button 2622 on the personal information mask processing result confirmation screen 262 was pressed. If the "Cancel" button 2622 is pressed, the processor 11 determines YES in ACT 139, discards the execution result of the workflow template, and ends the workflow template execution processing operation. If the "Cancel" button 2622 is not pressed, the processor 11 determines NO in ACT 139 and proceeds to processing in ACT 140.

In ACT 140, the processor 11 determines an addition designation operation for adding one or more new mask target word was performed on the result image 2621 on the personal information mask processing result confirmation screen 262. Such an operation may be a mouse click operation or a touch operation at the position of a frame line 2624 of a word. If an addition designation operation has been performed, the processor 11 determines YES in ACT 140, and proceeds to processing in ACT 142. If the operation is not an addition designation operation, the processor 11 determines NO in ACT 140, and proceeds to processing in ACT 141.

In ACT 141, the processor 11 determines whether a mask deletion designation operation has been performed on a masked word on the result image 2621 on the personal information mask processing result confirmation screen 262. For example, such an operation may be a mouse click operation or a touch operation at the position of a mask 2625. If the operation is a mask deletion designation operation, the processor 11 determines YES in ACT 141, and proceeds to processing in ACT 143. If the operation is not a mask deletion designation, the processor 11 determines NO in ACT 141, and returns to the processing in ACT 138.

In ACT 142, the processor 11 updates the workflow template by adding a new mask target word to the settings of the workflow template stored in the temporary storage unit of the main memory 12. Thereafter, the processor 11 proceeds to the processing in ACT 134, executes the updated workflow template, and causes/permits the user to verify the revised execution result.

In ACT 143, the processor 11 checks whether deletion permission is included in the executed workflow template. As described above, in the workflow template creation processing, when the system-detected personal information deletion permission checkbox 2616 on the personal information mask processing setting screen 261 is checked, the user is permitted to delete masking of system-identified sensitive information or the like. Then, when a template with this permission setting is applied to a workflow, the workflow template includes deletion permission. If deletion permission is not provided/set, the processor 11 determines NO in ACT 143 and proceeds to the processing in ACT 138. If deletion permission is included/provided, the processor 11 determines YES in ACT 143 and proceeds to processing in ACT 144.

In ACT 144, the processor 11 updates the workflow template by deleting the masking of the targeted word from the settings of the workflow template stored in the temporary storage unit of the main memory 12. Thereafter, the processor 11 proceeds to the processing in ACT 134, executes the updated workflow template, and causes/permits the user to verify the revised execution result.

In this way, the workflow template can be executed on the processing target document from the user terminal 3, and the execution result can be verified at the user terminal 3 to add a necessary mask or to remove an unnecessary mask.

In an example, the service providing system according to the embodiment includes the administrator terminal 2 that is used by the administrator who creates the template to be applied to the workflow in which the mask processing on the personal information is defined in advance, the user terminals 3 used by the users who use the workflow template, and the workflow management server 1, which is an apparatus capable of communicating with the administrator terminal 2 and the user terminals 3 via the network NW and executing a workflow template on a document file from the user terminal 3. The processor 11 of the workflow management server 1 may receive a designation of any word as the mask target word, and add the mask processing for this mask target word to the workflow template. The added mask target word can be an addition to the personal information already defined in or by the workflow. As described above, the processor 11 operates as an example of a mask processing setting unit.

As described above, in an embodiment, any word can be added to the workflow template as a mask processing target. Therefore, it is possible to avoid omission of mask processing during execution of the workflow.

The processor 11 of the workflow management server 1 can receive a designation of the personal information or a word to be unmasked and may delete the mask processing on the personal information or the word from the workflow template.

Therefore, according to the embodiment, it is possible to prevent unnecessary masking when executing the workflow.

In an example, the processor 11 of the workflow management server 1 executes the workflow template on a sample document file from the administrator terminal 2, and causes the administrator terminal 2 to present the execution result on the personal information mask processing result confirmation screen 262. Then, the processor 11 receives, from the administrator terminal 2, a designation of any word as an additional mask target word or a designation of personal information or a word to be unmasked.

As described above, the administrator can thus verify the execution result from the workflow template by using the sample document, and can add necessary masking or delete unnecessary masking.

The processor 11 of the workflow management server 1 receives a designation operation of a word shown on the result image 2621 on the personal information mask processing result confirmation screen 262 presented on the administrator terminal 2 as a designation of any word to be a mask target word, and receives a designation operation of a mask shown on the result image 2621 as the designation of personal information or a word to be unmasked.

Therefore, according to the embodiment, the administrator can designate information to be masked or not with an easy operation.

The processor 11 of the workflow management server 1 causes the administrator terminal 2 to present the personal information mask processing setting screen 261. The processor 11 receives a text input of a word into the word input field 2613 included in the personal information mask processing setting screen 261 as a designation of a word that is to be the mask target word.

Thus, the administrator can directly input a word that is to be a mask target word.

The processor 11 of the workflow management server 1 executes a workflow template on a document file from the user terminal 3 and causes the user terminal 3 to present the execution result incorporating the personal information mask processing result on a confirmation screen. Then, the processor 11 receives, from the user terminal 3, a designation of any word as a mask target word and/or a designation of personal information or a word to be unmasked.

As described above, the user can verify the execution result of the workflow template and can add a necessary masking or delete an unnecessary masking.

The processor 11 of the workflow management server 1 receives an operation designating a word on the result image on the result confirmation screen presented on the user terminal 3 as a designation of a word to be a mask target word and receives a designation of a mask on the result image as a designation of information or a word to be unmasked.

Therefore, the user can designate information or a word by an easy operation.

The processor 11 of the workflow management server 1 communicates through the communication interface 14 with the administrator terminal 2 (that can be used by an administrator to create the template to be applied to the workflow incorporating the mask processing for the personal information as defined in advance) and the user terminal 3 (that can be used by a user of the workflow template) via the network NW. As described above, the processor 11 functions as a communication unit in this context. Then, the processor 11 cooperates with the administrator terminal 2 to create the template, and applies the template to a workflow. As described above, the processor 11 functions as a creation unit in this context. Then, the processor 11 acquires a document file from the user terminal 3 and executes the workflow template on the acquired document file. As described above, the processor 11 functions as an acquisition unit and an execution unit. The processor 11 receives, via the network NW, a designation of a word as a mask target word and adds processing for masking the mask target word to the workflow template in addition to processing already set for masking of the personal information defined for the workflow. As described above, the processor 11 functions as a mask processing setting unit.

As described above, in the embodiment, any word can be added to a workflow template as a mask processing target. Therefore, according to the embodiment, it is possible to adjust the mask processing during execution of the workflow.

### Other Embodiments

In an example, the workflow template is created and executed by one workflow management server 1, but in other examples the information processing system may include one server that creates the workflow template and another server that executes the workflow template separately.

Instead of a cloud service, the storage destination for the execution result of the workflow template may be a user terminal 3 that is the same as or different from the user terminal 3 that provides the processing target document.

In an example, an administrator can freely select whether to permit the user to add and/or delete a masking, but in other examples selections may be fixed and changes may require additional permissions or not. For example, addition and deletion of a masking may be performed only by an administrator-level user or the like.

The specific processing flow of the above-described information processing example as performed by the processor 11 of the workflow management server 1 is not limited to the example ordering in the provided flowcharts. The order of processing may be changed, or pieces of the processing may be performed in parallel as long as there is no discrepancy with the preceding or subsequent processing.

In an embodiment, various control programs are stored in advance in the auxiliary storage device 13 of the workflow management server 1. However, in other examples, a control program may be transferred separately from the workflow management server 1 and installed subsequently by an administrator or the like. The transfer of a control program can be performed by storing the control program in a removable non-transitory computer readable medium or by communication via a network. The recording medium may be in any form or format, such as a CD-ROM or a memory card, as long as the recording medium can store a program and can be read by a device.

While several embodiments have been described, the embodiments have been presented by way of example and are not intended to limit the scope of the disclosure. These novel embodiments can be implemented in various other forms, and various omissions, substitutions, and modifications can be made without departing from the scope of the disclosure as defined by the appended claims. The embodiments thereof are included in the scope of the disclosure and are included in a scope of the disclosure disclosed in the claims and equivalents thereof.

## Claims

1. An information processing system, comprising:
an administrator terminal configured to permit an administrator to create a workflow template including a masking processing step to mask predefined personal information;
a user terminal configured to permit a user to request execution of a workflow corresponding to the workflow template created by the administrator; and
an information processing apparatus configured to communicate with the administrator terminal and the user terminal via a network and execute the workflow corresponding to the workflow template on a document file selected by the user of the user terminal, wherein
the information processing apparatus is further configured to:
receive a designation of a word to be added as a mask target word to be masked in the masking processing step of the workflow template; and
add the designated word as the mask target word to the workflow template.

2. The information processing system according to claim 1, wherein the information processing apparatus is further configured to:
receive a designation of a word to be unmasked in the workflow; and
change the workflow template so the designated word to be unmasked is not masked in the masking processing step.

3. The information processing system according to claim 2, wherein the designation of the word to be unmasked is received from the administrator terminal or from the user terminal via a results display screen displaying an output of the workflow corresponding to the workflow template applied to a sample document file, wherein preferably the designation of the word to be unmasked is made as a selection of a masked word region displayed on the results display screen.

4. The information processing system according to claim 2 or 3, wherein the designation of the word to be unmasked is received from the user terminal via a results display screen displaying an output of the workflow corresponding to the workflow template applied to the document file selected by the user of the user terminal.

5. The information processing system according to any of claims 1 to 4, wherein the designation of the word to be unmasked is made as a selection of a masked word region displayed on the results display screen, or wherein the designation of the word to be added as the mask target word is made as a selection of an unmasked word region displayed on the results display screen.

6. The information processing system according to any of claims 1 to 5, wherein the designation of the word to be added as the mask target word is made via entry of text in an added word region displayed on a masking settings screen.

7. An information processing apparatus for an information processing system for an automated document masking workflow processing, the apparatus comprising:
a communication interface to connect to an administrator terminal and a user terminal via a network; and
a processor configured to:
execute a workflow corresponding to a workflow template on a document file selected by a user of the user terminal, the workflow template including a masking processing step to mask predefined personal information;
receive a designation of a word to be added as a mask target word to be masked in the masking processing step of the workflow template; and
add the designated word as the mask target word to the workflow template.

8. The information processing apparatus according to claim 7, wherein the processor is further configured to:
receive a designation a word to be unmasked in the workflow; and
change the workflow template so the designated word to be unmasked is not masked in the masking processing step.

9. The information processing apparatus according to claim 8, wherein the designation of the word to be unmasked is received from the administrator terminal via a results display screen displaying an output of the workflow corresponding to the workflow template applied to a sample document file.

10. The information processing apparatus according to any of claims 8 to 9, wherein the designation of the word to be unmasked is made as a selection of a masked word region displayed on the results display screen.

11. The information processing system according to any of claims 8 to 10, wherein
the designation of the word to be unmasked is received from the user terminal via a results display screen displaying an output of the workflow corresponding to the workflow template applied to the document file selected by the user of the user terminal,
and/or wherein the designation of the word to be unmasked is made
as a selection of a masked word region displayed on the results display screen and/or
as a selection of an unmasked word region displayed on the results display screen, or wherein the designation of the word to be added as the mask target word is made via entry of text in an added word region displayed on a masking settings screen.

12. The information processing apparatus according to any of claims 8 to 11, wherein the designation of the word to be unmasked is received from the user terminal via a results display screen displaying an output of the workflow corresponding to the workflow template applied to a sample document file.

13. The information processing apparatus according to any of claims 7 to 12, wherein the designation of the word to be added as the mask target word is made via entry of text in an added word region displayed on a masking settings screen.

14. An information processing method for an information processing system for an automated document masking workflow processing, the method comprising:
executing, on a workflow management server, a workflow corresponding to a workflow template on a document file selected by a user of the user terminal, the workflow template including a masking processing step to mask predefined personal information;
receiving a designation of a word to be added as a mask target word to be masked in the masking processing step of the workflow template; and
add the designated word as the mask target word to the workflow template.

15. The information processing method according to claim 14, further comprising:
receiving a designation a word to be unmasked in the workflow; and
changing the workflow template so the designated word.
